# EUROPEAN PATENT SPECIFICATION

(11) **EP 1 843 919 B1**
(45) Date of publication and mention of the grant of the patent: **12.03.2008**
(21) Application number: 05843359.0
(22) Date of filing: 22.12.2005
(51) Int. Cl.: B60R 7/02

(54) **STORAGE DEVICE FOR USE IN A VEHICLE**
LAGERUNGSVORRICHTUNG ZUR VERWENDUNG IN EINEM FAHRZEUG
DISPOSITIF DE STOCKAGE A UTILISER DANS UN VEHICULE

(30) Priority: 23.12.2004 GB 0428275
(43) Date of publication of application: 17.10.2007
(73) Proprietor: Nissan Motor Manufacturing (UK) Ltd., Bedfordshire MK43 0DB (GB)
(72) Inventor: BRADLEY, Andrew, Nissan Tech. Centre Europe Ltd., Bedfordshire MK43 0DB (GB); SMART, Chris, Nissan Technical Centre Europe Ltd, Bedfordshire MK43 0DB (GB); CONNOLLY, Barry, Nissan Tech. Centre Europe Ltd, Bedfordshire MK43 0DB (GB); FROST, Daniel, Nissan Technical Centre Europe Ltd, Bedfordshire MK43 0DB (GB)
(74) Representative: Hufton, Victoria Alice
(86) International application number: PCT/GB2005/005013
(87) International publication number: WO 2006/067468

(56) References cited:
- WO-A-20/04065197
- US-A- 5 415 457
- US-A- 5 484 091
- US-A- 5 769 294
- US-A1- 2004 124 330

## Description

The present invention relates to storage devices for use within motor vehicles. Typically, such storage devices are suitable for supporting cargo, such as shopping bags, within the trunk or book space of the vehicle. The invention also relates to a vehicle provided with such a storage device.

Hooks are well-known in vehicles either as hooks that are fixed in place or as retractable hooks, which may be rotated from a stored position into a deployed position so that they may be used to support cargo, such as shopping bags, only when required. Such a stowable hook device is described in US 5769294 A. Typically, the types of bags to be carried on such hooks are manufactured from flimsy plastic and offer very little structure. An opening at the top of the bag allows cargo to be placed inside and two handles allow the bag to be carried. Such bags take the shape of the cargo placed inside and, because of their lack of structure, present a problem when they are to be transported in the trunk or boot of a vehicle.

When vehicles are driven, articles within the vehicle are subjected to acceleration and deceleration forces as well as centrifugal forces when the vehicle is cornering. Inevitably, shopping bags in the boot of a vehicle will move around while the vehicle is in motion. This may cause damage to the bags and their contents, cause the contents of shopping bags to be spilled and cause inconvenience to the driver and/or passengers. More alarmingly, items of shopping rolling around in the boot may distract the driver, thus increasing the risk of an accident.

Both of the aforementioned types of hook offer the advantage that they retain the bags in a reasonably secure position, preventing damage to the bag and/or cargo and minimising inconvenience for the driver. However, both types of hooks have associated disadvantages. Hooks that permanently protrude are a waste of boot space and susceptible to damage. Furthermore, the hooks look unsightly when they are not in use. Although retractable hooks as mentioned previously do overcome the above problems they have to be manually operated individually between their retracted and deployed positions. It is to be expected that a number of hooks would be advantageous but to manually deploy a number of hooks individually would be time consuming and not an attractive option.

The object of this invention is to provide a storage device for use within a vehicle, which may be stored and deployed easily and quickly. The hooks in their deployed position are used to support and retain cargo such as shopping bags. A further object of this invention is to provide a versatile storage device that enables more space to be utilised, protects the hooks from damage and ensures a more attractive vehicle interior when the hooks are not in use.

According to a first aspect of the invention, there is provided a storage device for use within a vehicle having a vehicle trim, the storage device comprising a plurality of retaining members coupled to a common carrier member so as to be movable simultaneously from a stored position to a deployed position through actuation of the common carrier member. When the retaining members are in the deployed position, they protrude from the vehicle trim such that an item of cargo may be attached to the retaining members.

'Retaining member' used herein, is intended to mean a member that may be used to retain an item in place, and a hook is one example of this. 'Simultaneously' is intended to signify within approximately the same time frame, or at substantially exactly the same time. The term 'trim' is intended to denote a structured and aesthetically pleasing material covering, as is commonly used in the automotive industry.

Preferably, the retaining members may also be moved simultaneously from the deployed position back to the stored position by actuation of the carrier member.

The storage device allows more space to be utilised within the vehicle and enables multiple shopping bags to be carried safely and securely. Furthermore, as the retaining members can be retracted into a stored position in which they are hidden from view, the appearance of the vehicle interior is more attractive when the device is not in use. The invention provides a versatile storage option that may be controlled easily by the user, and offers the advantage that a plurality of retaining members are available to retain cargo without the need to manually deploy each of the retaining members individually.

Actuation of the carrier member may typically be mediated via a deployment means, which suitably comprises a user interface in the form of a lever or handle. The term 'deployment means' is intended to mean a device that facilitates deployment/storage of the retaining members.

The retaining members in the stored position lie substantially flush, or lie against, the vehicle trim, while the retaining members in the deployed position protrude from the vehicle trim such that an item of cargo may be attached to a retaining member. The retaining members may be selected from one of the following: hooks; Velcro® fasteners; magnetic fasteners; caribinas; and flaps. A person skilled in the art would recognise other suitable options also.

The deployment means suitably mediates deployment of the retaining members by transmitting an action to the retaining members selected from one of the following: manual rotation; rotation driven by an electric motor; activation or deactivation of an electromagnet; applying a biasing force; releasing a biasing force; translational motion.

Preferably, the deployment means further includes a clutch arrangement comprising first and second clutch members, wherein the first clutch member is coupled to, or forms an integral part of, the carrier member and wherein the second clutch member is coupled to, or forms an integral part of, the user interface.

In a particularly preferred embodiment, the user interface is a lever which extends perpendicularly relative to the carrier member and is capable of engagement with, or coupling to, the carrier member, by virtue of the clutch arrangement, so as to mediate deployment of the retaining members.

The clutch arrangement allows the lever to be disengaged, or de-coupled, from the carrier member and thus rotated into a stored position after the retaining members have been deployed.

In one embodiment, the deployment means facilitates rotational movement of the carrier member, and thereby the retaining members, between the stored and deployed positions. Preferably the carrier member is an axial member, such as a rod or a bar, and the plurality of retaining members are mounted at intervals along the length of the axial member.

In a second embodiment, the deployment means facilitates translational movement of the carrier member, and thereby the retaining members, between the stored and deployed positions.

In a third embodiment, the retaining members are pivotally mounted at intervals along the length of the axial member. In this case the deployment means facilitates axial movement of the axial member such that the retaining members move pivotally between the stored position and deployed position, in use, hen the axial member is moved in a forward or rearward axial direction.

In a fourth embodiment, the carrier member is a surface and the retaining members are mounted at intervals along the surface, the deployment means further comprising an electromagnet located on or within the surface such that the retaining members may be moved between the deployed and stored positions by either activating or deactivating the electromagnet. Typically, the surface comprises the trim of the vehicle and the electromagnet may be situated behind the trim. Preferably, the electromagnet may be connected to a voltage supply via a control switch, wherein the control switch is used to activate/deactivate the electromagnet and thus functions as a user interface.

This option offers a simple method of deployment that may include an option wherein the retaining members are deployed in sequence, within the same time frame, making the deployment more appealing to the user.

Preferably, any of the storage devices detailed above further comprise a stop means which serves to prevent movement of the retaining members beyond the deployed and stored positions, thus preventing damage to the retaining members by over rotation. The stop means may take the form of first and second stop members, a first stop member for preventing over-rotation in a deployed direction (i.e. when the retaining members are being deployed) and a second stop member for preventing over-rotation in a stored direction (i.e. when the retaining members are being stored).

At least a portion of the retaining members is visibly displayed when in the stored position, and so preferably said portion may be furnished in the same material as the vehicle trim. This offers a vehicle interior that is more attractive, even when the retaining members are in their deployed position.

A second aspect of this invention provides a storage device for use in a vehicle, comprising a plurality of retaining members which can be deployed or stored simultaneously, wherein said retaining members are permanently mounted to or just behind recesses provided in the vehicle trim. In this aspect the storage device further comprises a plurality of doors for closing or covering the recesses, wherein said doors may be opened to allow deployment of the retaining members. A deployment means is provided to facilitate opening and closing of the doors.

The second aspect of the invention offers the advantage that the retaining members may be fixed in place and, as such, may be less susceptible to damage. The retaining members are covered when they are in their stored position, ensuring the appearance of the vehicle interior is not prejudiced.

Preferably, any of the storage devices detailed above may be suitable for installation in a boot or trunk of a vehicle.

A further aspect of this invention provides a vehicle comprising a compartment having a floor and side walls covered by a trim, with at least one of the walls supporting any one of the storage devices detailed above. Typically, the supporting side wall may be a side panel of the compartment or a surface of the rear vehicle seat back.

A preferred embodiment of the invention will now be described with reference to the accompanying drawings in which:
- Figure 1: shows a view of the interior of the vehicle and a number of retaining members,
- Figure 2a: shows a front view of a number of retaining members in their stored position,
- Figure 2b: shows a side view, in the direction of A, of a retaining member in its stored position,
- Figure 2c: shows a front view of a number of retaining members in their deployed position, and
- Figure 2d: shows a side view, in the direction of A, of a retaining member in its deployed position.

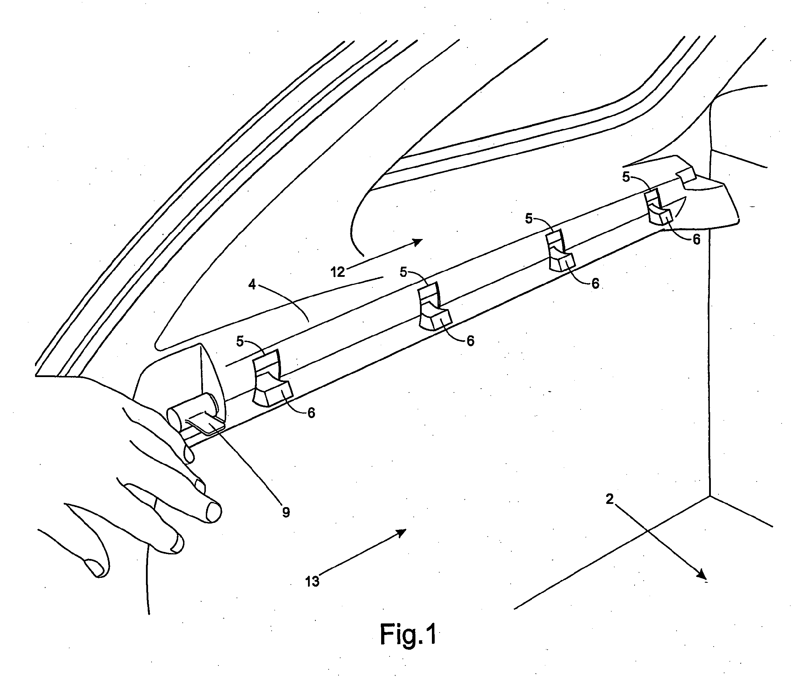

Figure 1 shows a vehicle luggage-storage compartment, referred to generally as 13, defined by a floor 2, two side panels 3 and a surface of a rear seat back (not visible). The side panels 3, and optionally the rear seat back, may be covered by a trim 4 (not clearly shown in Figure 1) which is provided for aesthetic reasons to provide an appealing finish. The trim 4 is provided with a plurality of openings 5, behind each of which is housed a retaining member in the form of hook 6. The hooks 6 are movable between a stored position, in which they locate behind the trim 4, and a deployed position in which they project through the openings 5 to stand proud of the trim 4.

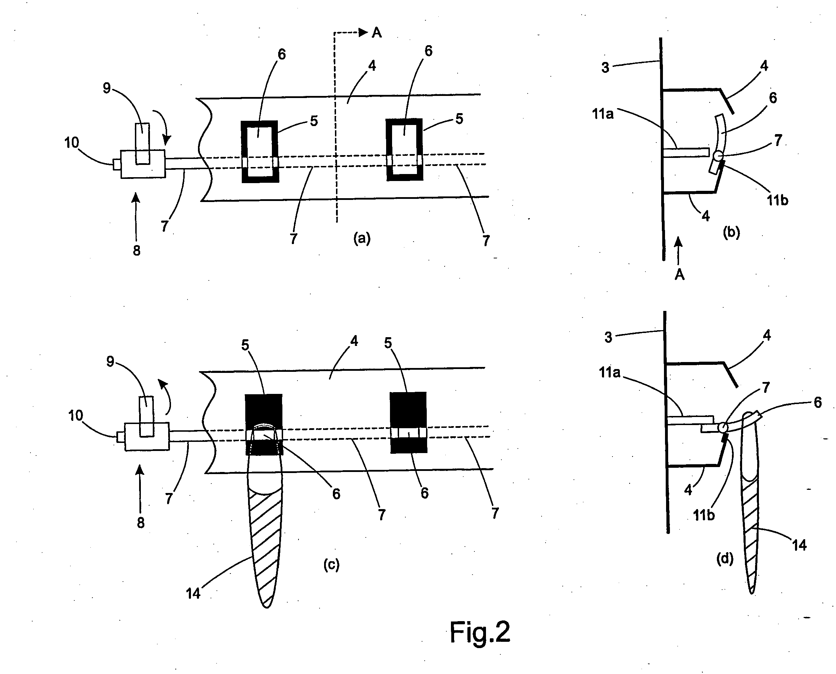

Referring also to Figures 2(a) to (d), the hooks 6 are mounted at intervals along the length of a carrier member in the form of an axial member, bar or rod 7, which runs parallel to the side panel 3 and is located behind the trim 4. One end of the axial member 7 is connectable with, or forms a part of, a deployment means 8 which allows rotational drive (deployment torque) to be imparted to the axial member 7 when it is required to deploy the hooks 6.

The deployment means 8 includes a lever 9, which is operated by the user to activate the rotational drive. Typically, the deployment means 8 may take the form of a clutch arrangement (not illustrated in detail), in which the lever 9 provides the function of a first clutch member and the axial member 7 provides the function of a second clutch member. The clutch members 7, 9 are biased into engagement with one another, in which circumstances angular movement or rotation of the lever 9 about the axis of the axial member 7 causes the axial member 7 and the lever 9 to rotate together. When the axial member 7 is caused to rotate, the hooks 6 are rotated through approximately 90 degrees in a clockwise (or forward) direction between the stored position (as shown in Figure 2b) and the deployed position (as shown in Figure 2d).

The deployment means 8 also includes a user-operable button or switch 10 which, when pushed, overcomes the biasing force acting on the clutch members, thereby causing the clutch members 7, 9 to disengage. In such circumstances, the lever 9 can be rotated independently of the axial member 7. The device is also provided with a stop means, which serves to prevent over-rotation of the hooks 6 in either the deployed or stored directions of rotation. The stop means may include a plurality of first stop members 11a and a plurality of second stop members 11b, one of each type of stop member being provided for each of the hooks 6. The first and second stop members 10a, 10b prevent over-rotation in the deployed or stored directions, respectively. Alternatively, only a single first stop member and a single second stop member may be provided, each of which extends along that length of the axial member 7 upon which the hooks 6 are provided so as to provide the aforementioned stop function.

The sequence of steps required to operate the storage device between its stored and deployed positions will now be described in further detail.

Starting from the position in which the hooks 6 are in their stored position, the lever is in the position in which it lies flush with the vehicle trim 4, out of the way of the boot space. In order to utilise the hooks 6, the lever 9 must be rotated through about 90° in a forward direction, into a position in which it projects outwardly from the trim 4. This causes the hooks 6 to be rotated out of their stored position into their deployed position, in which they project through the openings 5. Items of cargo 14, such as shopping bags for example, may then be suspended from the hooks 6.

During this step in the sequence, the rearward portion of each hook 6 makes contact with its first stop member 11a, such that the axial member 7, and thereby the hooks 6, are prevented from over-rotating in the deployed direction.

The hooks 6 are designed so that the weight of the load is spread along the length of the hook 6 and away from the rotational axis. The axial member 7 only provides a mechanical link between the hooks 6 to allow for transmission of deployment torque, so that the hooks 6 are deployed simultaneously. The axial member 7 is not usually intended to support the weight of the cargo 14. Therefore, the loading force originating from the cargo 14 is transmitted via the hooks 6 to the stop members 11a and 11b and not along the axial member. This has the advantage that rigidity designed into the side panels 3 may be utilised instead of relying on axial member supports (not shown) to support the weight of the cargo 14.

In order to prevent the lever 9 protruding into the vehicle space once the hooks have been deployed 6, the clutch arrangement allows the lever 9 to be disengaged from the axial member 7 and rotated into its stored position. This prevents damage being caused to the lever 9, and ensures that a projecting lever does not inconvenience the user by protruding into the luggage storage space.

Disengagement of the clutch 7, 9 is facilitated by depressing or operating the button 10, thus allowing the lever 9 to be rotated independently of the axial member 7 back into a position in which it lies flush with the trim 4 whilst the hooks 6 remain deployed.

When the hooks 6 are deployed they may be utilised to retain cargo, such as shopping bags 14, in position within the luggage compartment 13. Whilst the vehicle is driven, this prevents a situation where the cargo 14 may be spilled within the luggage compartment 13 causing damage to the cargo 14 or inconvenience to the user.

When the vehicle arrives at its destination, the cargo 14 may be removed from the hooks 6. Once the hooks 6 are unloaded and it is required to move them back into their deployed position, out of the way behind the vehicle trim 4, the button 10 is operated once again and the lever rotated forward through about 90° to return it to its deployed position. When the button 10 is released, the lever becomes coupled or otherwise engaged with the axial member 7 (i.e. through the clutch) so that both the lever 9 and the axial member 7 may be rotated together. Rotating the lever 9 anticlockwise causes the hooks 6 to be returned to their stored position where they once again lie substantially flush with the vehicle trim 4.

During this step of the sequence, the rearward portion of each hook 6 makes contact with its second stop member 11b to prevent over-rotation in the stored direction.

The clutch mechanism of the deployment means 8 may take one of several forms, for example a dog clutch or a spline-type clutch arrangement. Alternatively, a friction clutch may be employed, whereby the clutch members do not disengage entirely when the clutch is deactivated (e.g. be operating the button 10), but the frictional force between them is reduced sufficiently to de-couple the parts 7, 9 and allow independent movement thereof.

It will be appreciated that the axial member 7 and the lever 9 need not themselves form the first and second clutch members, but may be separate parts coupled to the first and second clutch members respectively. This may be a beneficial arrangement as it allows an off-the-shelf clutch component to be incorporated within the device.

In another alternative embodiment (not shown), the need for a clutch arrangement may be removed altogether by providing a rotatable knob at the end of the axial member 7 for rotation back and forth to either store or deploy the hooks 6. In this case there is no requirement for the knob to be de-coupled from the axial member 7 as it remains flush with the vehicle trim 4 irrespective of the amount through which it is turned.

In a further alternative embodiment, the hooks 6 may be mounted on an axial member 7 that is coupled to a deployment means for facilitating translational movement of the axial member 7, and hence the hooks 6, between the stored and deployed positions. In one embodiment, translational motion of the axial member may be lateral or tangential to the axis of the axial member 7 so that the axial member 7 is moved forward towards the compartment 13 when the hooks are to be deployed through the openings 5 and rearward away from the compartment 13 when the hooks 6 are to be stored.

Alternatively, the axial member 7 may be movable axially to deploy the hooks 6. In this case, pivotally mounted hooks 6 may be provided along the length of the axial member 7, which are retained behind a surface of the trim 4 when the axial member 7 is in a first axial position, but which are released to pivot forwards through openings 5 as the member 7 is moved axially into a second axial position.

In another embodiment, it is envisaged that the hooks 6 are mounted permanently to recesses or openings provided in the vehicle trim. A plurality of doors are provided, one to cover each of the recesses, wherein the doors may be opened to allow deployment of the hooks. In this embodiment, the deployment means facilitates operation of the doors between an open and closed position.

It will be appreciated that other deployment means are also possible for allowing operation of a user interface to move the hooks between the stored and deployed positions. For example, the clutch may be configured with reverse biasing so that the button must be depressed to deploy the hooks and released to allow the lever and the hooks to be moved separately. Rotational drive by an electric motor, operable by a switch, is also envisaged.

## Claims

1. A storage device (12) for use within a vehicle having a vehicle trim (4), the storage device comprising a plurality of retaining members (6) coupled to a common carrier member (7) so as to be movable simultaneously from a stored position to a deployed position through actuation of the common carrier member (7), and wherein the retaining members (6) in the deployed position protrude from the trim (4) of the vehicle (13) such that an item of cargo (14) may be attached to a retaining member (6) and
wherein a portion of the retaining members (6) is visibly displayed when in the stored position and wherein said portion is furnished in the same material as the vehicle trim (4).

2. A storage device (12) as claimed in claim 1 or claim 2, whereby actuation of the carrier member (7) is mediated via a deployment means that facilitates translational movement of the carrier member (7) and thereby the retaining members (6) between the stored and deployed positions.

3. A storage device (12) as claimed in claim 2, wherein the deployment means includes a clutch arrangement (7, 9) comprising first and second clutch members.

4. A storage device (12) as claimed in claim 3, wherein the first clutch member (8) is coupled to, or forms an integral part of, the carrier member (7) and wherein the second clutch member is coupled to, or forms an integral part of, a user interface (9) of the deployment means (8).

5. A storage device (12) device as claimed in claim 4, wherein the user interface is a handle or a lever (9).

6. A storage device (12) as claimed in claim 5, wherein the lever (9) extends perpendicularly relative to the carrier member (7), said lever (9) being capable of engagement with the carrier member (7) so as to mediate deployment of the retaining members (6).

7. A storage device (12) as claimed in claim 6, wherein the clutch arrangement permits the lever (9) to be disengaged from the carrier member (7) and rotated into a stored position to lie against or substantially flush with the vehicle trim (4), whilst the retaining members (6) maintain their deployed position.

8. A storage device (12) as claimed in claim 2, wherein the carrier member is an axial member (7) and wherein the retaining members (6) are pivotally mounted at intervals along the length of the axial member (7), the deployment means (8) facilitating translational movement of the axial member (7) along its axis such that the retaining members (6) move pivotally between the stored and deployed positions.

9. A storage device (12) as claimed in claim 2, wherein the carrier member is a surface and the retaining members (6) are mounted at intervals along the surface, the deployment means (8) further comprising an electromagnet located on or within the surface such that the retaining members (6) can be moved between the deployed and stored positions by either activating or deactivating the electromagnet.

10. A storage device (12) as claimed in claim 9, wherein the electromagnet is connected to a voltage supply via a control switch, wherein the control switch is used to activate/deactivate the electromagnet and thus functions as a user interface.

11. A storage device (12) as claimed in claim 9 or claim 10, wherein the surface comprises the vehicle trim (4) and the electromagnet is situated behind the vehicle trim (4).

12. A storage device for use in a vehicle, the storage device comprising a plurality of retaining members (6), which can simultaneously be deployed or stored, wherein said retaining members (6) are permanently mounted in or behind recesses in the vehicle trim (4), the storage device further comprising one or more doors for covering the recesses, wherein the doors are operable to allow deployment of the retaining members (6), the device further comprising a deployment means (8) which facilitates operation of the doors between an open and closed position.

## Patentansprüche

1. Aufbewahrungsvorrichtung (12) zur Verwendung in einem Fahrzeug mit einer Fahrzeugverkleidung (4), wobei die Aufbewahrungsvorrichtung mehrere Halteglieder (6) umfasst, die an ein gemeinsames Trägerglied (7) gekoppelt sind, um gleichzeitig durch Betätigung des gemeinsamen Trägerglieds (7) aus einer verstauten Stellung in eine ausgefahrene Stellung bewegbar zu sein, und wobei die Halteglieder (6) in der ausgefahrenen Stellung von der Verkleidung (4) des Fahrzeugs (13) vorstehen so dass ein Gegenstand der Ladung (14) an einem Halteglied (6) angebracht werden kann, und
wobei in der verstauten Stellung ein Abschnitt der Halteglieder (6) sichtbar angeordnet ist und wobei der genannte Abschnitt aus dem selben Material bereitgestellt wird, wie die Fahrzeugverkleidung (4).

2. Aufbewahrungsvorrichtung (12) nach Anspruch 1 oder Anspruch 2, wobei die Betätigung des Trägerglieds (7) über ein Ausfahrmittel vermittelt wird, das die Translationsbewegung des Trägerglieds (7) und damit der Halteglieder (6) zwischen der verstauten und der ausgefahrenen Stellung ermöglicht.

3. Aufbewahrungsvorrichtung (12) nach Anspruch 2, wobei das Ausfahrmittel eine Kupplungsanordnung (7, 9) umfasst, die ein erstes und ein zweites Kupplungsglied umfasst.

4. Aufbewahrungsvorrichtung (12) nach Anspruch 3, wobei das erste Kupplungsglied (8) an das Trägerglied (7) gekoppelt ist oder einen integralen Bestandteil desselben bildet und wobei das zweite Kupplungsglied an eine Benutzerschnittstelle (9) des Ausfahrmittels (8) gekoppelt ist oder einen integralen Bestandteil desselben bildet.

5. Aufbewahrungsvorrichtung (12) nach Anspruch 4, wobei es sich bei der Benutzerschnittstelle um einen Griff oder einen Hebel (9) handelt.

6. Aufbewahrungsvorrichtung (12) nach Anspruch 5, wobei sich der Hebel (9) senkrecht relativ zum Trägerglied (7) erstreckt, wobei der genannte Hebel (9) zum Eingriff mit dem Trägerglied (7) in der Lage ist, um das Ausfahren der Halteglieder (6) zu vermitteln.

7. Aufbewahrungsvorrichtung (12) nach Anspruch 6, wobei die Kupplungsanordnung zulässt, dass der Hebel (9) vom Trägerglied (7) ausgerückt und in eine verstaute Stellung gedreht wird, um an der Fahrzeugverkleidung (4) anzuliegen oder mit ihr im Wesentlichen bündig zu sein, während die Halteglieder (6) ihre ausgefahrene Stellung beibehalten.

8. Aufbewahrungsvorrichtung (12) nach Anspruch 2, wobei es sich bei dem Trägerglied um ein Axialglied (7) handelt und wobei die Halteglieder (6) drehbar in Abständen entlang der Länge des Axialglieds (7) angebracht sind, wobei das Ausfahrmittel (8) die Translationsbewegung des Axialglieds (7) entlang seiner Achse ermöglicht, so dass sich die Halteglieder (6) drehend zwischen der verstauten und der ausgefahrenen Stellung bewegen.

9. Aufbewahrungsvorrichtung (12) nach Anspruch 2, wobei es sich bei dem Trägerglied um eine Oberfläche handelt und die Halteglieder (6) in Abständen entlang der Oberfläche angebracht sind, wobei das Ausfahrmittel (8) weiter einen Elektromagneten umfasst, der sich auf oder in der Oberfläche befindet, so dass die Halteglieder (6) durch Aktivieren bzw. Deaktivieren des Elektromagneten zwischen der ausgefahrenen und der verstauten Stellung bewegt werden können.

10. Aufbewahrungsvorrichtung (12) nach Anspruch 9, wobei der Elektromagnet über einen Bedienungsschalter mit einer Spannungsversorgung verbunden ist, wobei der Bedienungsschalter verwendet wird, um den Elektromagneten zu aktivieren beziehungsweise zu deaktivieren und daher als Benutzerschnittstelle funktioniert.

11. Aufbewahrungsvorrichtung (12) nach Anspruch 9 oder Anspruch 10, wobei die Oberfläche die Fahrzeugverkleidung (4) umfasst und der Elektromagnet hinter der Fahrzeugverkleidung (4) positioniert ist.

12. Aufbewahrungsvorrichtung zur Verwendung in einem Fahrzeug, wobei die Aufbewahrungsvorrichtung mehrere Halteglieder (6) umfasst, die gleichzeitig ausgefahren oder verstaut werden können, wobei die genannten Halteglieder (6) permanent in oder hinter Aussparungen in der Fahrzeugverkleidung (4) angebracht sind, wobei die Aufbewahrungsvorrichtung weiter eine oder mehrere Türen zum Abdecken der Aussparungen umfasst, wobei die Türen betätigbar sind, um das Ausfahren der Halteglieder (6) zuzulassen, wobei die Vorrichtung weiter ein Ausfahrmittel (8) umfasst, das die Betätigung der Türen zwischen einer geöffneten und einer geschlossenen Stellung ermöglicht.

## Revendications

1. Dispositif de rangement (12) destiné à être utilisé à l'intérieur d'un véhicule comportant une garniture de véhicule (4), le dispositif de rangement comprenant une pluralité d'éléments de retenue (6) couplés à un élément de support commun (7) de façon à être déplaçables simultanément d'une position escamotée à une position déployée par l'actionnement de l'élément de support commun (7), et dans lequel les éléments de retenue (6) dans la position déployée font saillie de la garniture (4) du véhicule (13) de telle sorte qu'un article de chargement (14) puisse être attaché à un élément de retenue (6) et
dans lequel une partie des éléments de retenue (6) est visiblement exposée quand ils se trouvent dans la position escamotée et dans lequel ladite partie est revêtue de la même matière que la garniture de véhicule (4).

2. Dispositif de rangement (12) selon la revendication 1 ou la revendication 2, par lequel l'actionnement de l'élément de support (7) est facilité par l'intermédiaire d'un moyen de déploiement qui facilite le mouvement de translation de l'élément de support (7) et ainsi des éléments de retenue (6) entre les positions escamotée et déployée.

3. Dispositif de rangement (12) selon la revendication 2, dans lequel le moyen de déploiement comporte un agencement d'embrayage (7, 9) comprenant des premier et second éléments d'embrayage.

4. Dispositif de rangement (12) selon la revendication 3, dans lequel le premier élément d'embrayage (8) est couplé à l'élément de support (7) ou fait partie intégrante de celui-ci et dans lequel le second élément d'embrayage est couplé à une interface d'utilisateur (9) du moyen de déploiement (8) ou fait partie intégrante de celle-ci.

5. Dispositif de rangement (12) selon la revendication 4, dans lequel l'interface d'utilisateur est une poignée ou un levier (9).

6. Dispositif de rangement (12) selon la revendication 5, dans lequel le levier (9) s'étend perpendiculairement à l'élément de support (7), ledit levier (9) pouvant s'engager avec l'élément de support (7) de façon à faciliter le déploiement des éléments de retenue (6).

7. Dispositif de rangement (12) selon la revendication 6, dans lequel l'agencement d'embrayage permet de désengager le levier (9) de l'élément de support (7) et de le tourner dans une position escamotée pour qu'il repose contre la garniture de véhicule (4) ou sensiblement affleure celle-ci, tandis que les éléments de retenue (6) maintiennent leur position déployée.

8. Dispositif de rangement (12) selon la revendication 2, dans lequel l'élément de support est un élément axial (7) et dans lequel les éléments de retenue (6) sont montés de façon pivotante à des intervalles le long de l'élément axial (7), le moyen de déploiement (8) facilitant le mouvement de translation de l'élément axial (7) le long de son axe de telle sorte que les éléments de retenue (6) se déplacent de façon pivotante entre les positions escamotée et déployée.

9. Dispositif de rangement (12) selon la revendication 2, dans lequel l'élément de support est une surface et les éléments de retenue (6) sont montés à des intervalles le long de la surface, les moyens de déploiement (8) comprenant en outre un électro-aimant situé sur ou dans la surface de telle sorte que les éléments de retenue (6) puissent être déplacés entre les positions déployée et escamotée par activation ou désactivation de l'électro-aimant.

10. Dispositif de rangement (12) selon la revendication 9, dans lequel l'électro-aimant est connecté à une alimentation électrique par l'intermédiaire d'un commutateur de commande, où le commutateur de commande sert à activer/désactiver l'électro-aimant et sert donc d'interface d'utilisateur.

11. Dispositif de rangement (12) selon la revendication 9 ou la revendication 10, dans lequel la surface comprend la garniture de véhicule (4) et l'électro-aimant est situé derrière la garniture de véhicule (4).

12. Dispositif de rangement destiné à être utilisé dans un véhicule, le dispositif de rangement comprenant une pluralité d'éléments de retenue (6), lesquels peuvent être simultanément déployés ou escamotés, dans lequel lesdits éléments de retenue (6) sont montés en permanence dans des évidements dans la garniture de véhicule (4) ou derrière ceux-ci, le dispositif de rangement comprenant en outre une ou plusieurs trappes pour couvrir les évidements, où les trappes sont actionnables pour permettre le déploiement des éléments de retenue (6), le dispositif comprenant en outre un moyen de déploiement (8) qui facilite l'actionnement des trappes entre une position ouverte et une position fermée.
